# EUROPÄISCHE PATENTSCHRIFT

(11) **EP 2 854 543 B1**
(45) Veröffentlichungstag und Bekanntmachung des Hinweises auf die Patenterteilung: **24.08.2016**
(21) Anmeldenummer: 13724578.3
(22) Anmeldetag: 22.05.2013
(51) Int. Cl.: A01N 47/36, A01N 25/04, A01N 25/22, A01N 25/30

(54) **CHEMISCHE STABILISIERUNG VON IODOSULFURON-METHYL-NATRIUMSALZ DURCH HYDROXYSTEARATE**
CHEMICAL STABILISATION OF IODOSULFURON-METHYL-SODIUM SALT USING HYDROXYSTEARATES
STABILISATION CHIMIQUE D'IODOSULFURON-MÉTHYLE-SODIUM PAR HYDROXYSTÉARATES

(30) Priorität: 25.05.2012 EP 12169514
(43) Veröffentlichungstag der Anmeldung: 08.04.2015
(73) Patentinhaber: Bayer CropScience AG, 40789 Monheim am Rhein (DE)
(72) Erfinder: RÖCHLING, Andreas, 40764 Langenfeld (DE); AKYÜZ, Ankin, 60385 Frankfurt am Main (DE)
(74) Vertreter: BIP Patents
(86) Internationale Anmeldenummer: PCT/EP2013/060448
(87) Internationale Veröffentlichungsnummer: WO 2013/174833

(56) Entgegenhaltungen:
- EP-A1- 0 554 015
- WO-A1-01/30156
- WO-A1-2004/054364
- WO-A1-2005/051082
- US-A1- 2005 026 787

## Beschreibung

Die vorliegende Erfindung betrifft neue Öldispersions-Formulierungen (OD-Formulierungen) von Iodosulfuron-methyl-Natriumsalz, die Hydroxystearate, insbesondere Lithium-Hydroxy-Stearat, enthalten. Iodosulfuron-methyl-Natriumsalz ist ein herbizider Wirkstoff aus der Gruppe der Sulfonamide, insbesondere der Sulfonylharnstoffe.

Wirkstoffe für den Pflanzenschutz werden im Allgemeinen nicht in ihrer reinen Form eingesetzt. In Abhängigkeit von dem Anwendungsgebiet und der Anwendungsart, sowie von physikalischen, chemischen und biologischen Parametern wird der Wirkstoff in Mischung mit üblichen Hilfs- und Zusatzstoffen als Wirkstoffformulierung eingesetzt. Auch die Kombinationen mit weiteren Wirkstoffen zur Erweiterung des Wirkungsspektrum und/oder zum Schutz der Kulturpflanzen (z.B. durch Safener, Antidote) sind bekannt.

Formulierungen von Wirkstoffen für den Pflanzenschutz sollten im allgemeinen eine hohe chemische und physikalische Stabilität, eine gute Applizierbarkeit und Anwenderfreundlichkeit und eine breite biologische Wirkung mit hoher Selektivität aufweisen.

Herbizide Wirkstoffe aus der Gruppe der Sulfonamide, wie Sulfonylharnstoffe, weisen im Allgemeinen ein hohes Maß an chemischer Reaktivität auf und neigen zum chemischen Abbau, z.B. durch Hydrolyse.

Eine Möglichkeit, chemisch labile Wirkstoffe zu formulieren, ist die Herstellung fester Formulierungen. So sind Formulierungen von Wirkstoffen aus der Gruppe der Sulfonylharnstoffe, in Form von Pulvern, Granulaten und Tabletten bekannt (z.B. in EP-A- 764404, WO-A- 1998/34482, WO-A- 1993/13658). Die Verfahren zur Herstellung von festen Formulierungen, z.B. in Form von Granulaten und Tabletten sind jedoch im allgemeinen aufwendig, insbesondere wenn niedrig schmelzende Wirkstoffe oder Hilfs- und Zusatzstoffe eingearbeitet werden. Außerdem sind feste Formulierungen im Allgemeinen schwieriger zu applizieren und weniger anwenderfreundlich.

In der US-A 2005/026787 werden beispielsweise flüssige Formulierungen offenbart, welche herbizide Wirkstoffe aus der Gruppe der ALS-Inhibitoren (Acetolactatsynthetase-Hemmer) enthalten.

Flüssige Formulierungen sind in den meisten Fällen leichter applizierbar, sind anwenderfreundlicher und zeigen zudem im Allgemeinen eine bessere biologische Wirksamkeit.

Flüssige Formulierungen von Sulfonylharnstoffen sind z.B. beschrieben in US-B- 4599412, US-B-4683000, US-B-4671817, EP-A-245058, WO-A-2001/82693, EP-A-0313317, EP-A-0514768, EP-A-163598 und EP-A-0514769. Ebenfalls werden flüssige Suspensionskonzentrate in der WO-A 01/30156 oder EP-A 0 554 015 offenbart.

In der WO-A 2005/051082 werden Ölsuspensionskonzentrate, enthaltend ein oder mehrere herbizide Wirkstoffe aus der Gruppe der Sulfonamide, in suspendierter Form, ein oder mehrere Safener, ein oder mehrere organische Lösungsmittel und ein oder mehrere Sulfosuccinate als Pflanzenschutzmittel beschrieben.

Die Aufgabe, eine verbesserte Pflanzenschutzmittelformulierung mit den chemisch sehr reaktiven Sulfonylharnstoffen zur Verfügung zu stellen, welche eine hohe chemische Stabilität sowie eine hohe biologische Effektivität und Kulturpflanzenverträglichkeit aufweist, wurde durch die Patentanmeldung WO-A-2004/054364 beschrieben.

In WO-A-2004/054364 wird dazu der Einsatz von Sulfosuccinaten als Hilfsstoff beschrieben. Sulfosuccinate werden mittlerweile in den meisten Öldispersions-Formulierungen von Sulfonylharnstoffen verwendet und bewirken die chemische Stabilisierung der Sulfonylharnstoffe.

Da das häufig eingesetzte Dioctylsulfosuccinate Natrium-Salz gemäß EU-Richtlinie 67/548/EWG oder 1999/45/EG die Einstufung R 41 (Gefahr ernster Augenschäden) aufweist, wurde nach weiteren, anwenderfreundlicheren Alternativen zur chemischen Stabilisierung von Sulfonylharnstoffen gesucht.

Zusätzlich werden die Öldispersionen in der Regel mit Schichtsilikaten verdickt, um Phasentrennungen und Absetzten von Feststoffpartikeln zu verhindern. Die bisher am häufigsten dafür genutzten Komponenten sind die Bentone-Typen Bentone 34® und Bentone 38® der Firma Elementis GmbH auf Basis von Montmorillonit. Diese neigen allerdings recht häufig zur unkontrollierbar starken Verdickungen, die das Entleeren der Handelsgebinde erschweren können.

Aus der Schmiermittel-Industrie ist darüber hinaus die Verwendung von Hydroxystearaten als Verdicker bekannt. Ein Einsatz von Stearaten in agrochemischen Formulierungen ist bislang jedoch nicht beschrieben.

Es wurde nun gefunden, dass beim Einsatz von Hydroxystearaten als Verdicker in Öl-basierten flüssigen Formulierungen von Iodosulfuron-methyl-Natriumsalz das Hydroxystearat neben der Verdickung überraschenderweise auch eine chemische Stabilisierung der Sulfonylharnstoffe bewirkt.

Insbesondere zeigte das Lithiumhydroxystearat einen besonders signifikant stabilisierenden Effekt auf das Natrium-Salz vom Iodosulfuron.

Die Erfindung betrifft Formulierungen in Form einer Öldispersion enthaltend
- als agrochemischen Wirkstoff Iodosulfuron-methyl-Natriumsalz,
- ein oder mehrere Hydroxystearate, ausgewählt aus der Gruppe bestehend aus Lithiumhydroxystearat, Natriumhydroxystearat, Calciumhydroxystearat oder

Zinkhydroxystearat und
- mindestens einen Emulgator und
- mindestens ein Pflanzen- oder Mineralöl oder einen Ester eines Pflanzen- oder Mineralöls und
- ggf. weitere Hilfs- und Zusatzstoffe.

Bevorzugt betrifft die Erfindung Formulierungen in Form einer Öldispersion enthaltend
- 0,01 bis 10 Gew.-%, bevorzugt 0,1 bis 5 Gew.-%, bezogen auf das Gewicht der Formulierung, Iodosulfuron-methyl-Natriumsalz, und
- 0,01 bis 10 Gew.-%, bevorzugt 0,1 bis 5 Gew.-% , bezogen auf das Gewicht der Formulierung, eines oder mehrerer Hydroxystearate und
- 0,1 bis 20 Gew.-%, bevorzugt 1 bis 15 Gew.-% , bezogen auf das Gewicht der Formulierung, eines oder mehrerer Emulgatoren und
- 50 bis 99 Gew-%, bevorzugt 55 bis 95 Gew.-% , bezogen auf das Gewicht der Formulierung, eines oder mehrerer Pflanzen- oder Mineralöle oder Ester eines oder mehrerer Pflanzen- oder Mineralöle und
- ggf. weitere Hilfs- und Zusatzstoffe.

Dabei beziehen sich die Gewichtsanteile in Gew.-% bei Vorliegen mehrerer Hydroxystearate, Emulgatoren oder Öle oder deren Ester in der erfindungsgemäßen Formulierung jeweils auf die Summe der Hydroxystearate, Emulgatoren oder Öle oder deren Ester.

Die erfindungsgemäßen Formulierungen sind wasserfrei, d.h. ihr Wassergehalt beträgt weniger als 1 Gew.-% bezogen auf das Gewicht der Formulierung.

Die Erfindung betrifft auch ein Verfahren zur Herstellung der erfindungsgemäßen Fonnulierungen, bei dem man das Natrium-Salz des Iodosulfuron-methyls zusammen mit dem Emulgator in dem Pflanzen- oder Mineralöl oder in dem Ester eines Pflanzen- oder Mineralöls fein dispergiert und anschließend das Hydroxystearat und ggf. weitere Hilfs- und Zusatzstoffe zugibt.

Die Erfindung betrifft auch ein Verfahren zur Herstellung der erfindungsgemäßen Formulierungen, bei dem man das Natrium-Salz des Iodosulfuron-methyls zusammen mit dem Emulgator, dem Hydroxystearat und ggf. weiteren Hilfs- und Zusatzstoffen in dem Pflanzen- oder Mineralöl oder in dem Ester eines Pflanzen- oder Mineralöls fein dispergiert.

Die Erfindung betrifft auch die Verwendung der erfindungsgemäßen Formulierungen zur Bekämpfung von Unkraut. Bevorzugt werden dazu die erfindungsgemäßen Formulierungen mit Wasser verdünnt und so ein Pflanzenschutzmittel hergestellt, das anschließend zur Bekämpfung des unerwünschten Pflanzenwachstums eingesetzt werden kann.

Die Erfindung betrifft auch ein Verfahren zur Bekämpfung von unerwünschtem Pflanzenwuchs, bei dem man die erfindungsgemäße Formulierung oder das erfindungsgemäße Pflanzenschutzmittel auf die Schadpflanzen (Unkraut), Pflanzenteile, Pflanzensamen oder die Fläche, auf der die Pflanzen wachsen, appliziert.

Bevorzugt enthalten die erfindungsgemäßen Formulierungen Iodosulfuron-methyl-Natriumsalz als einzigen Wirkstoff. Es ist jedoch ebenfalls möglich, zusätzlich zu Iodosulfuron-methyl-Natriumsalz einen oder mehrere weitere agrochemische Wirkstoffe und / oder Safener in der erfindungsgemäßen Formulierung zu verwenden.

Geeignete weitere agrochemische Wirkstoffe sind insbesondere 2,4-D-2-Ethylhexylester, Amidosulfuron-Natriumsalz, Diflufenican, Flufenacet, Fenoxaprop-P-ethyl, Foramsulfuron-Natriumsalz, Indaziflam, Isoxaflutole, Metribuzin, Mesosulfuron-methyl-Natriumsalz, Propoxycarbazone-Natriumsalz, Pyrasulfotole, Tembotrione, Thiencarbazone-methyl, Triafamone.

Geeignete Safener sind insbesondere Cyprosulfamide, Isoxadifen-ethyl, Mefenpyr-diethyl.

Bevorzugt enthalten die erfindungsgemäßen Formulierungen Lithiumhydroxystearat, besonders bevorzugt Lithium 12-Hydroxystearat. Bevorzugt enthalten die erfindungsgemäßen Formulierungen dabei Lithiumhydroxystearat als einziges Hydroxystearat.

Bevorzugte nichtionische Emulgatoren und Dispergatoren sind z.B. alkoxylierte Alkohole, alkoxylierte Fettsäuren, alkoxylierte Triglyceride, die Hydroxyfettsäuren enthalten, Polyethylenoxid-Polypropylenoxid-Block-Copolymere und Alkylphenolalkoxylate.

Bevorzugte ionische Emulgatoren/Dispergatoren sind z.B. Salze von Alkylarylsulfon- oder phosphonsäuren und Polyelektrolyte aus der Polykondensation von Naphthalinsulfonat und Formaldehyd.

Bevorzugte Pflanzen- oder Ester von Pflanzenölen sind Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl.

Die Fettsäureester sind bevorzugt Ester von C10-C22-, vorzugsweise C12-C20-Fettsäuren. Die C10-C22-Fettsäureester sind beispielsweise Ester ungesättigter oder gesättigter C10-C22-Fettsäuren, insbesondere mit gerader Kohlenstoffatomzahl, z.B. Erucasäure, Laurinsäure, Palmitinsäure und insbesondere C18-Fettsäuren wie Stearinsäure, Ölsäure, Linolsäure oder Linolensäure.

Besonders bevorzugt ist Rapsölmethylester.

Bevorzugte Mineralöle sind Gemische von aromatischen und aliphatischen Kohlenwasserstoffen, wie Lösungsmittel der Solvesso®R-Reihe z.B. Solvesso®100, Solvesso®R150 oder Solvesso®200 (ExxonMobil Chemicals), der Solvarex®/Solvaro®-Reihe (TotalFinaElf) oder der Caromax®R-Reibe z.B. Caromax®28 (Petrochem Carless).

Besonders bevorzugt sind Solvesso® 200 und Solvesso® 200 ND.

Die Pflanzen- oder Mineralöle oder deren Ester können allein oder im Gemisch enthalten sein. Die verwendeten Öle weisen bevorzugt ein geringes Lösevermögen für das verwendete bzw. die verwendeten agrochemischen Wirkstoffe, insbesondere die Phenylsulfonamide auf.

Bevorzugte Hilfs- und Zusatzstoffe sind neben den Tensiden wie Emulgatoren und Dispergatoren, Verdickungs- und Thixotropiermittel, Netz-, Anti-Drift-, Haft-, Penetrations-, Konservierungs- und Frostschutzmittel, Antioxidantien, Lösungsvermittler, Füll-, Träger- und Farbstoffe, Entschäumer, Düngemittel, Verdunstungshemmer, sowie den pH-Wert und die Viskosität beeinflussende Mittel.

Die erfindungsgemäßen Formulierungen weisen eine ausgezeichnete herbizide Wirksamkeit gegen ein breites Spektrum wirtschaftlich wichtiger mono- und dikotyler annueller Schadpflanzen auf. Auch schwer bekämpfbare perennierende Schadpflanzen, die aus Rhizomen, Wurzelstöcken oder anderen Dauerorganen austreiben, werden durch die Formulierungen gut erfasst.

Gegenstand der vorliegenden Erfindung ist daher auch ein Verfahren zur Bekämpfung von unerwünschten Pflanzen oder zur Wachstumsregulierung von Pflanzen, vorzugsweise in Pflanzenkulturen, worin eine erfindungsgemäße Formulierung oder ein daraus bereitetes Pflanzenschutzmittel (bevorzugt Applikationsbrühen wie z.B. Spritzbrühen) auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden. Dabei können die erfindungsgemäßen Formulierungen oder die daraus bereiteten Pflanzenschutzmittel z.B. im Vorsaat- (ggf. auch durch Einarbeitung in den Boden), Vorauflauf- oder Nachauflaufverfahren ausgebracht werden. Im Einzelnen seien beispielhaft einige Vertreter der mono- und dikotylen Unkrautflora genannt, die durch die die erfindungsgemäßen Formulierungen oder ein daraus bereitetes Pflanzenschutzmittel kontrolliert werden können, ohne dass durch die Nennung eine Beschränkung auf bestimmte Arten erfolgen soll.

Monokotyle Schadpflanzen der Gattungen: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Dikotyle Unkräuter der Gattungen: Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Formulierungen oder der daraus bereiteten Pflanzenschutzmittel auf die grünen Pflanzenteile im Nachauflaufverfahren litt nach der Behandlung Wachstumsstop ein und die Schadpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Darüber hinaus weisen die erfindungsgemäßen Formulierungen oder ein daraus bereitetes Pflanzenschutzmittel (abhängig von der ausgebrachten Aufwandmenge) hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleiclaterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da beispielsweise die Lagerbildung hierdurch verringert oder völlig verhindert werden kann.

Aufgrund ihrer herbiziden und pflanzenwachstumsregulatorischen Eigenschaften können die Formulierung oder ein daraus bereitetes Pflanzenschutzmittel auch zur Bekämpfung von Schadpflanzen in Kulturen von gentechnischen oder durch konventionelle Mutagenese veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z.B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt bezüglich transgener Kulturen ist die Anwendung der erfindungsgemäßen Verbindungen in wirtschaftlich bedeutenden transgenen Kulturen von Nutz- und Zierpflanzen, z.B. von Getreide wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten.

Vorzugsweise können die erfindungsgemäßen Verbindungen als Herbizide in Nutzpflanzenkulturen eingesetzt werden, welche gegenüber den phytotoxischen Wirkungen der Herbizide resistent sind bzw. gentechnisch resistent gemacht worden sind.

Die nachfolgend aufgeführten Beispiele (Tabelle 1- 9) zeigen die chemische Stabilisierung des NatriumSalzes von Iodosulfuron-methyl durch Lithumhydroxystearat.

### Herstellungsbeispiele:

In den für OD-Formulierungen (Öldispersions-Formulierungen) üblichen Lösungsmitteln wie Rapsölmethylester oder Solvesso 200 ND® (Aromaten-Gemisch der Firma Exxon AG) wird das Natrium-Salz des Iodosulfuron-methyls (Iodosulfuron-methyl-sodium, IMS) zusammen mit einem üblichen Emulgator wie Emulsogen EL 400® (Ricinusölpolyglycolether der Firma Clariant AG) durch einen Rotor-Stator-Mixer fein dispergiert. Unter anderem können noch weitere Formulierhilfsmittel wie der Verdicker Bentone 38® (Schichtsilikat der Firma Elementis AG) oder die Polymere Ligalub PEG 400 MO® (Polyethylenglycolmonooleat der Fa. Peter Greven GmbH), Ligalub 12 GE® (Glycerindioleat der Fa. Peter Greven GmbH) oder Ligalub 71 KE® (Komplexester der Fa. Peter Greven GmbH) dem System zugegeben werden. Weiterhin wurde vergleichend zu jeder Mischung noch zusätzlich Lithium-Hydroxystearat (Lithiumseife einer 12-Hydroxy-stearinsäure) zugegeben.

In den Tabellen 1 bis 9 sind die Zusammensetzungen der getesteten OD-Formulierungen (%-Angaben in Gew.-%) aufgeführt.

Der Abbau des IMS wird dabei mittels HPLC bestimmt.

Der Abbau wird dabei in den Tabellen 1 bis 9 in - xx % ausgedrückt. Das bedeutet, dass nach dem relevanten Zeitraum bereits xx % des ursprünglich vorhandenen IMS abgebaut war.

In allen aufgeführten Systemen hat der Abbau vom Natrium-Salz des Iodosulfuron nach Lagerung bei verschiedenen Lager-Temperaturen und verschiedenen Lager-Zeiten durch die Zugabe von Lithiumhydroxystearat deutlich abgenommen.

**Tabelle 1:**

| | | |
|---|---|---|
| Iodosulfuron-methyl-sodium (IMS) | 0,5 % | 0,5 % |
| Emulsogen EL 400 | 10% | 10% |
| Lithumhydroxystearat | 0% | 1 % |
| Bentone 38 | 1,2 % | 1,2% |
| Rapsölmethylester | 88,3 % | 87,3 % |
| | | |
| Abbau IMS nach 1 Woche bei 54 °C | -78,3 % | - 23,9 % |
| Abbau IMS nach 4 Wochen bei 40 °C | -46,4 % | -5% |
| Abbau IMS nach 8 Wochen bei 40 °C | -69,7 % | -8,7 % |
| Abbau IMS nach 12 Wochen bei 35 °C | -57,8 % | -6,3 % |

**Tabelle 2:**

| | | | | |
|---|---|---|---|---|
| Iodosulfuron-methyl-sodium (IMS) | 0,5 % | 0,5 % | 0,5 % | 0,5 % |
| Emulsogen EL 400 | 10 % | 10 % | 10 % | 10 % |
| Lithumhydroxystearat | 0 % | 0,5 % | 1 % | 5 % |
| Solvesso 200 ND | 89,5 % | 89 % | 88,5 % | 84,5 % |
| | | | | |
| Abbau IMS nach 2 Wochen bei 54 °C | -87,9 % | -32,2 % | -28 % | -14,7 % |
| Abbau IMS nach 4 Wochen bei 40 °C | -29,9 % | -7,4 % | -3,4 % | -3,6 % |

**Tabelle 3:**

| | | |
|---|---|---|
| Iodosulfuron-methyl-sodium (IMS) | 2 % | 2 % |
| Emulsogen EL 400 | 10 % | 10 % |
| Lithumhydroxystearat | 0 % | 1 % |
| Solvesso 200 ND | 88 % | 87 % |
| | | |
| Abbau IMS nach 2 Wochen bei 54 °C | -34,6 % | -13,1 % |
| Abbau IMS nach 4 Wochen bei 40 °C | -5,2 % | -0,2 % |

**Tabelle 4:**

| | | |
|---|---|---|
| Iodosulfuron-methyl-sodium (IMS) | 0,5 % | 0,5 % |
| Emulsogen EL 400 | 10 % | 10 % |
| Lithumhydroxystearat | 0 % | 1 % |
| Ligalub PEG 400 MO | 15 % | 15 % |
| Solvesso 200 ND | 74,5 % | 73,5 % |
| | | |
| Abbau IMS nach 2 Wochen bei 54 °C | -93,2 % | -37,8 % |
| Abbau IMS nach 4 Wochen bei 40 °C | -34,9 % | -7,2 % |

**Tabelle 5:**

| | | |
|---|---|---|
| Iodosulfuron-methyl-sodium (IMS) | 0,5 % | 0,5 % |
| Emulsogen EL 400 | 10 % | 10 % |
| Lithumhydroxystearat | 0 % | 1 % |
| Ligalub PEG 400 MO | 30 % | 30 % |
| Bentone 38 | 1,2 % | 1,2 % |
| Rapsölmethylester | 58,3 % | 57,3 % |
| | | |
| Abbau IMS nach 2 Wochen bei 54 °C | -87,4 % | -45,8 % |
| Abbau IMS nach 4 Wochen bei 40 °C | -51,6 % | -14,8 % |
| Abbau IMS nach 8 Wochen bei 40 °C | -77,2 % | -21 % |
| Abbau IMS nach 12 Wochen bei 35 °C | -66,8 % | -13,6 % |

**Tabelle 6:**

| | | |
|---|---|---|
| Iodosulfuron-methyl-sodium (IMS) | 2 % | 2 % |
| Emulsogen EL 400 | 10 % | 10 % |
| Lithumhydroxystearat | 0 % | 1 % |
| Ligalub PEG 400 MO | 15 % | 15 % |
| Solvesso 200 ND | 73 % | 72 % |
| | | |
| Abbau IMS nach 2 Wochen bei 54 °C | -81,8 % | -32,7 % |
| Abbau IMS nach 4 Wochen bei 40 °C | -32,9 % | -3,2 % |

**Tabelle 7:**

| | | |
|---|---|---|
| Iodosulfuron-methyl-sodium (IMS) | 0,5 % | 0,5 % |
| Emulsogen EL 400 | 10 % | 10% |
| Lithumhydroxystearat | 0 % | 1 % |
| Ligalub 12 GE | 30 % | 30 % |
| Bentone 38 | 1,2 % | 1,2 % |
| Rapsölmethylester | 58,3 % | 57,3 % |
| | | |
| Abbau IMS nach 1 Wochen bei 54 °C | -42,4 % | -11,8 % |
| Abbau IMS nach 4 Wochen bei 40 °C | -76,6 % | -3,6 % |
| Abbau IMS nach 8 Wochen bei 40 °C | -65,9 % | -4,7 % |
| Abbau IMS nach 12 Wochen bei 35 °C | -55,7 % | -5,3 % |

**Tabelle 8:**

| | | |
|---|---|---|
| Iodosulfuron-methyl-sodium (IMS) | 0,5 % | 0,5 % |
| Emulsogen EL 400 | 10 % | 10 % |
| Lithumhydroxystearat | 0 % | 1 % |
| Ligalub 71 KE | 15 % | 15 % |
| Solvesso 200 ND | 74,5 % | 73,5 % |
| | | |
| Abbau IMS nach 2 Wochen bei 54 °C | -66,6 % | -9,86 % |
| Abbau IMS nach 4 Wochen bei 40 °C | -65 % | -5,6 % |

**Tabelle 9:**

| | | |
|---|---|---|
| Iodosulfuron-methyl-sodium (IMS) | 0,5 % | 0,5 % |
| Emulsogen EL 400 | 10 % | 10 % |
| Lithumhydroxystearat | 0% | 1 % |
| Ligalub 71 KE | 30% | 30 % |
| Bentone 38 | 1,2% | 1,2 % |
| Rapsölmethylester | 58,3 % | 57,3% |
| | | |
| Abbau IMS nach 1 Wochen bei 54 °C | -75,8 % | -11,4 % |
| Abbau IMS nach 4 Wochen bei 40 °C | -39,6 % | -2,3 % |
| Abbau IMS nach 8 Wochen bei 40 °C | -63,6 % | -3 % |
| Abbau IMS nach 12 Wochen bei 35 °C | -54,6 % | -3 % |

## Patentansprüche

1. Formulierungen in Form einer Öldispersion enthaltend
∘ als agrochemischen Wirkstoff Iodosulfuron-methyl-Natriumsalz,
∘ ein oder mehrere Hydroxystearate, ausgewählt aus der Gruppe bestehend aus Lithiumhydroxystearat, Natriumhydroxystearat, Calciumhydroxystearat oder Zinkhydroxystearat und
∘ mindestens einen Emulgator und
∘ mindestens ein Pflanzen- oder Mineralöl oder einen Ester eines Pflanzen- oder Mineralöls und
∘ ggf. weitere Hilfs- und Zusatzstoffe.

2. Formulierungen in Form einer Öldispersion gemäß Anspruch 1 enthaltend
∘ 0,01 bis 10 Gew.-% Iodosulfuron-methyl-Natriumsalz,
∘ 0,01 bis 10 Gew.-% eines oder mehrerer Hydroxystearate in der Summe und
∘ 0,1 bis 20 Gew.-% eines oder mehrerer Emulgatoren in der Summe und
∘ 50 bis 99 Gew-% eines oder mehrerer Pflanzen- oder Mineralöle oder Ester eines oder mehrerer Pflanzen- oder Mineralöle in der Summe und
o ggf. weitere Hilfs- und Zusatzstoffe.

3. Verfahren zur Herstellung der Formulierungen nach Anspruch 1 oder 2,
bei dem man das Natrium-Salz des Iodosulfuron-methyls zusammen mit dem Emulgator in dem Pflanzen- oder Mineralöl oder in dem Ester eines Pflanzen- oder Mineralöls dispergiert und anschließend das Hydroxystearat und ggf. weitere Hilfs- und Zusatzstoffe zugibt.

4. Verfahren zur Herstellung der Formulierungen nach Anspruch 1 oder 2,
bei dem man das Natrium-Salz des Iodosulfuron-methyls zusammen mit dem Emulgator, dem Hydroxystearat und ggf. weiteren Hilfs- und Zusatzstoffen in dem Pflanzen- oder Mineralöl oder in dem Ester eines Pflanzen- oder Mineralöls dispergiert.

5. Pflanzenschutzmittel erhältlich durch Verdünnen der Formulierungen nach Anspruch 1 mit Wasser.

6. Verwendung der Formulierung nach Anspruch 1 oder des Pflanzenschutzmittels nach Anspruch 5 zur Bekämpfung unerwünschten Pflanzenwuchses.

7. Verfahren zur Bekämpfung von unerwünschtem Pflanzenwuchs, bei dem man die Formulierung nach Anspruch 1 oder das Pflanzenschutzmittel nach Anspruch 5 auf Schadpflanzen, Pflanzenteile, Pflanzensamen oder die Fläche, auf der die Pflanzen wachsen, appliziert.

## Claims

1. Formulation in the form of an oil dispersion comprising
∘ as agrochemical active ingredient iodosulfuron-methyl sodium salt,
∘ one or more hydroxystearates selected from the group consisting of lithium hydroxystearate, sodium hydroxystearate, calcium hydroxystearate or zinc hydroxystearate and
∘ at least one emulsifier and
∘ at least one plant oil or mineral oil or an ester of a plant oil or mineral oil and
∘ optionally further auxiliaries and additives.

2. Formulation in the form of an oil dispersion according to Claim 1 comprising
∘ 0.01 to 10 % by weight of iodosulfuron-methyl sodium salt,
∘ 0.01 to 10 % by weight of one or more hydroxystearates in total and
∘ 0.1 to 20 % by weight of one or more emulsifiers in total and
∘ 50 to 99 % by weight of one or more plant or mineral oils or esters of one or more plant or mineral oils in total and
∘ optionally further auxiliaries and additives.

3. Process for the preparation of the formulations according to Claim 1 or 2,
in which the sodium salt of iodosulfuron-methyl is dispersed together with the emulsifier in the plant or mineral oil or in the ester of a plant or mineral oil and then the hydroxystearate and optionally further auxiliaries and additives are added.

4. Process for the preparation of the formulations according to Claim 1 or 2,
in which the sodium salt of iodosulfuron-methyl is dispersed together with the emulsifier, the hydroxystearate and optionally further auxiliaries and additives in the plant or mineral oil or in the ester of a plant oil or mineral oil.

5. Crop protection composition obtainable by diluting the formulations according to Claim 1 with water.

6. Use of the formulation according to Claim 1 or of the crop protection composition according to Claim 5 for controlling undesired plant growth.

7. Method for controlling undesired plant growth, in which the formulation according to Claim 1 or the crop protection composition according to Claim 5 is applied to harmful plants, plant parts, plant seeds or the area on which the plants grow.

## Revendications

1. Formulations sous la forme d'une dispersion huileuse, contenant :
- en tant qu'agent actif agrochimique, le sel de sodium d'iodosulfurone-méthyle,
- un ou plusieurs hydroxystéarates, choisis dans le groupe constitué par l'hydroxystéarate de lithium, l'hydroxystéarate de sodium, l'hydroxystéarate de calcium ou l'hydroxystéarate de zinc, et
- au moins un émulsifiant, et
- au moins une huile végétale ou minérale ou un ester d'une huile végétale ou minérale, et
- éventuellement d'autres adjuvants et additifs.

2. Formulations sous la forme d'une dispersion huileuse selon la revendication 1, contenant :
- 0,01 à 10 % en poids de sel de sodium d'iodosulfurone-méthyle,
- 0,01 à 10 % en poids d'un ou de plusieurs hydroxystéarates au total, et
- 0,1 à 20 % en poids d'un ou de plusieurs émulsifiants au total, et
- 50 à 99 % en poids d'une ou de plusieurs huiles végétales ou minérales ou d'un ester d'une ou de plusieurs huiles végétales ou minérales au total, et
- éventuellement d'autres adjuvants et additifs.

3. Procédé de fabrication des formulations selon la revendication 1 ou 2, selon lequel le sel de sodium de l'iodosulfurone-méthyle est dispersé conjointement avec l'émulsifiant dans l'huile végétale ou minérale ou dans l'ester d'une huile végétale ou minérale, puis l'hydroxystéarate et éventuellement d'autres adjuvants et additifs sont ajoutés.

4. Procédé de fabrication des formulations selon la revendication 1 ou 2, selon lequel le sel de sodium de l'iodosulfurone-méthyle est dispersé conjointement avec l'émulsifiant, l'hydroxystéarate et éventuellement d'autres adjuvants et additifs dans l'huile végétale ou minérale ou dans l'ester d'une huile végétale ou minérale.

5. Agent phytosanitaire pouvant être obtenu par dilution des formulations selon la revendication 1 avec de l'eau.

6. Utilisation de la formulation selon la revendication 1 ou de l'agent phytosanitaire selon la revendication 5 pour lutter contre une végétation indésirable.

7. Procédé de lutte contre une végétation indésirable, selon lequel la formulation selon la revendication 1 ou l'agent phytosanitaire selon la revendication 5 est appliqué sur des plantes nocives, des parties de plantes, des graines de plantes ou la surface sur laquelle les plantes poussent.
